(19) Europäisches Patentamt
European Patent Office
Office européen des brevets

(11) **EP 3 104 516 B1**

(12) **EUROPEAN PATENT SPECIFICATION**

(45) Date of publication and mention
of the grant of the patent:
**21.03.2018 Bulletin 2018/12**

(51) Int Cl.:
***H02M 7/538*** *(2007.01)*

(21) Application number: **15462002.5**

(22) Date of filing: **09.06.2015**

(54) **METHOD AND SYSTEM FOR DEAD TIME COMPENSATION IN A PWM CONTROLLED INVERTER**

VERFAHREN UND SYSTEM ZUR TOTZEIT-KOMPENSIERUNG IN EINEM PWM-GESTEUERTEN WECHSELRICHTER

PROCÉDÉ ET SYSTÈME DE COMPENSATION DE TEMPS MORT DANS UN ONDULEUR À COMMANDE PWM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.12.2016 Bulletin 2016/50**

(73) Proprietor: **Siemens Zrt.**
**1143 Budapest (HU)**

(72) Inventors:
• **Futó, András**
**H-8000 Székesfehérvár (HU)**
• **Varjasi, István**
**H-1221 Budapest (HU)**
• **Debreceni, Tibor**
**H-5700 Gyula (HU)**
• **Balázs, Gergely György**
**H-1143 Budapest (HU)**

(74) Representative: **Mak, Andras**
**S.B.G. & K. Patent and Law Offices**
**Andrassy ut 113.**
**1062 Budapest (HU)**

(56) References cited:
**DE-A1-102012 112 902     US-A1- 2015 077 025**

• **SEON-HWAN HWANG; JANG-MOK KIM: "Dead Time Compensation Method for Voltage-Fed PWM Inverter", IEEE TRANSACTIONS ON ENERGY CONVERSION, vol. 25, March 2010 (2010-03), pages 1-10, XP011297054,**
• **DAVID LEGGATE; RUSSEL J. KERKMAN: "Pulse Based Dead Time Compensator for PWM Voltage Inverters", IEEE TRANSACTIONS ON INDUSTRIAL ELECTRONICS, vol. 44, 1997, pages 191-197, XP000586504,**

**Description**

TECHNICAL FIELD

The invention generally relates to pulse wide modulation (PWM) controlled voltage sourced inverters (VSI) and more specifically to a method and system for dead time compensation in PWM controlled inverters and variable frequency drives.

DISCUSSION OF THE BACKGROUND

Nowadays, as electric cars and renewable energy sources like solar and wind generation are becoming widespread, the number of grid connected bi-directional inverters and variable frequency drives is increasing quickly. New inverters should be small and cheap, while harmonic emissions need to be kept low to conform regulations and to avoid disturbances caused by EMI if multiple inverters are used on the same grid, together with other equipment.

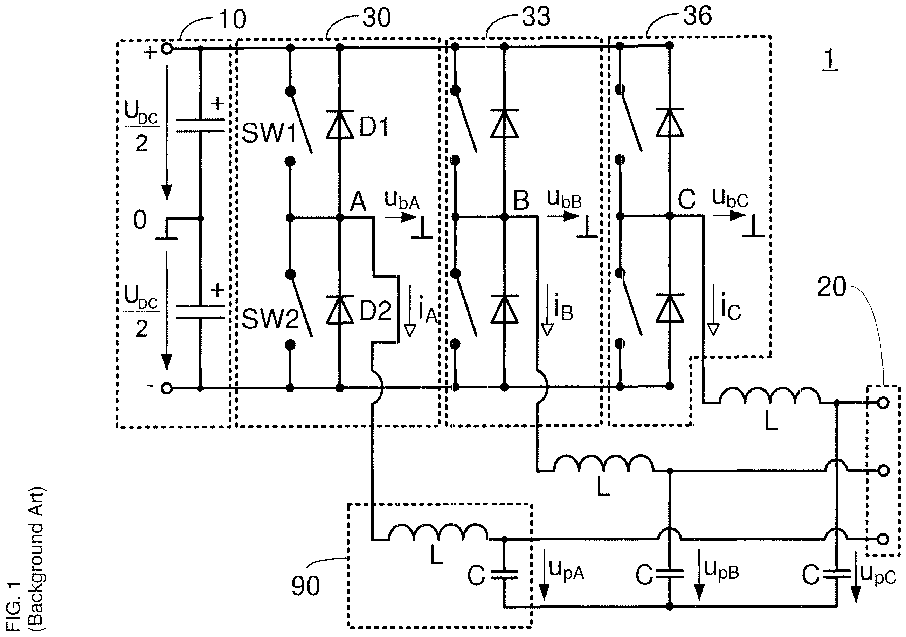

Figure 1 shows the main circuit of a conventional three phase grid connected PWM VSI (Pulse Width Modulated Voltage Source Inverter) system 1. System 1 operates between the DC-link 10 and the AC-link 20. System 1 includes three phase legs, phase leg 30 for phase "A", 33 for phase "B", and 36 for phase "C". Each phase leg, like leg 30 consists of two semiconductor switching elements connected in series, and two semiconductor diodes connected in series, wherein each of the diodes is connected in parallel with a respective semiconductor switching element: high-side switch (SW1) parallel with high-side diode (D1) and low-side switch (SW2) parallel with low-side diode (D2) The semiconductor switching elements can be BJT-s (bipolar junction transistor), MOSFET-s (Metal Oxide Semiconductor Field Effect Transistor), IGBT-s (Insulated Gate Bipolar Transistor) or any other controllable semiconductor switches. The switches are controlled using a controller unit (not shown in the drawing) which normally contains a DSP (Digital Signal Processor) or an FPGA (Field Programmable Gate Array) or a purpose designed ASIC (Application Specific Integrated Circuit). Each phase leg is filtered using a filter or load containing reactive components, like LC filter 90 for the phase "A". An inductive filter or load is always required, but capacitive filtering is also needed in grid connected applications. In Figure 1, $u_{bA}$, $u_{bB}$ and $u_{bC}$ refer to the phase leg voltages of the inverter, and $i_A$, $i_B$ and $i_C$ refer to the output currents of the phase legs 30 (for phase A), 33 (for phase B), and 36 (for phase C), respectively. The voltages of the AC grid 20 are referenced as $up_A$, $up_B$ and $up_C$. Figure 1 depicts only a minimal set of components relevant to the discussion. In ideal case sinusoidal duty cycle control of a PWM VSI would result in a sinusoidal output voltage. In practical realizations, however this is not the case. For sinusoidal duty cycle control, the output voltages are not completely sinusoidal in these inverters: these voltages always contain low order harmonics. This happens because of three main reasons:

    i.) the load dependent fluctuation of the DC bus voltage,
    ii.) the current dependent voltage drop -over the power semiconductor devices and
    iii.) the insertion of control dead time.

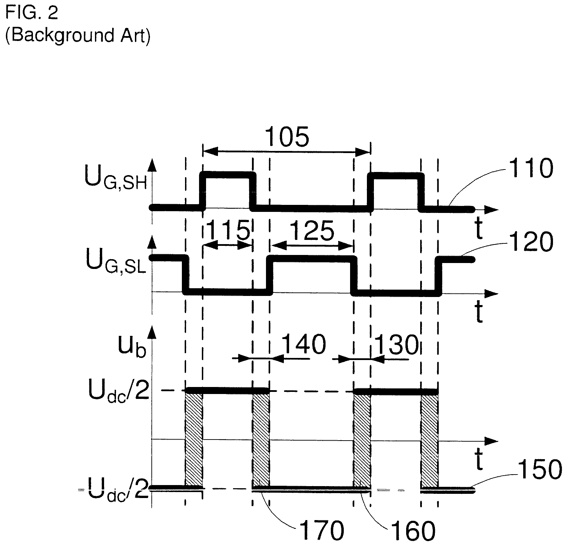

The fluctuation of the DC bus voltage is usually slow and not very significant; advanced controllers can cope with this problem easily. The switching transistor and the diode voltage drops are more problematic, as these are not only current dependent, but also depend on the temperature. Even so, the problem due to these voltage drops is usually minor and can be compensated by the inverter controller using pre-recorded semiconductor forward characteristics. The most problematic cause of nonlinearities is the insertion of control dead-time by the inverter controller. This is illustrated in Figure 2.

Figure 2 shows the control and output voltage waveforms of the VSI. The (time) period of the PWM carrier is denoted 105. The high-side and the low-side control signals 110 and 120 of a phase leg contain the low-to-high control dead-time 130 ($t_{cd\_LH}$) and the high-to-low control dead-time 140 ($t_{cd\_HL}$) which are inserted by the controller to avoid arm shoot-through. This effectively reduces the high switch ON time 115 and the low switch ON time 125. For safety reasons, these blanking intervals are always more than the transition time required to switch-over the phase leg. The output voltage 150 of the phase leg is well defined when the high- or the low side switch is controlled, but the voltage × time area (volt-seconds product) during the low-to-high 160 and the high-to-low 170 control dead-time is hard to predict. The transition time of the phase leg is equal to the difference between the off-delay ($t_{doff}$) and the on-delay ($t_{don}$) of the semiconductor switches ($t_t = t_{doff} + t_{don}$, not shown in Figure 2). What remains from the "control" dead-time inserted by the switch controller is the "effective" dead time: $t_d = t_{cd} - t_t$. During the effective dead-time, the output voltage depends on the output current, and may be different from the intended output voltage. If not compensated, this difference causes voltage inaccuracies and increased THD (Total Harmonic Distortion). This is most problematic if the average current is comparable to the current ripple, which happens at light load conditions. Moreover, if the current reaches zero during effective dead time, then a structure change happens and discontinuous conduction mode can occur. This means that both high- and low-side semiconductor switches in one or more of the phase legs of Figure 1 cease to conduct, and the bridge voltage $U_b$ will become equal to the grid voltage (or the back EMF (ElectroMotive Force) voltage in case of motor drives). This structure change can cause further nonlinearities.

The delays are not known exactly, and may depend on the current and the temperature of the semiconductor. Because of these, the length of the effective dead-time ($t_d$) can only be estimated using complex physical models or lookup tables containing past measurement data.

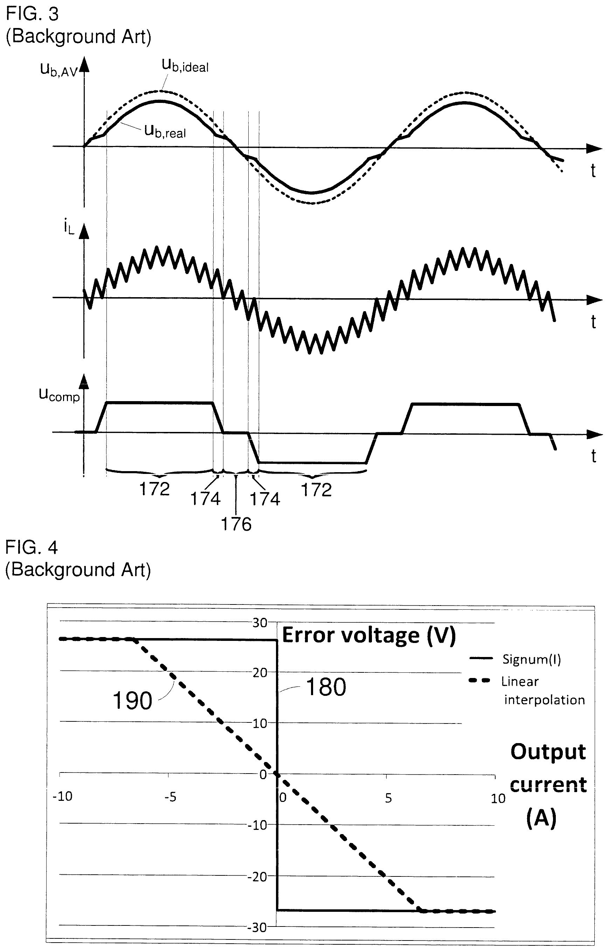

In Figure 3 the distortion effects caused by dead time can be well observed. During positive phase leg current, the phase leg voltage always becomes negative during the effective dead time regardless of the direction of the switch-over, because the diode D2 will conduct. This causes a negative error voltage which needs to be compensated via adding a positive compensating voltage to the reference. For negative currents, the same effect causes a positive error voltage via opening D2.

The error voltage is constant for current waveforms not containing zero crossings. Such time ranges are marked with 172. Nearly zero currents have a ripple which is positive at one switch-over, and negative at the next one. Such switch-over events produce dead time voltage errors with opposite signs, and as such, these cancel out, so no compensation is required. This is seen in the time range 176. Phase leg currents with switch-over events at close to zero current can be seen in the time range 174. Here an intermediate third case applies, with a required correction voltage smaller by absolute value than for the time range 176. This is so because here discontinuous conduction may happen during dead time. The time range 176 is usually very short, and as such, is often left uncompensated by simpler compensators.

The main goal of any dead-time compensator is to ensure that the voltage x time area at the output of each phase leg is the same as what would be if the input duty cycles were applied to an ideal, completely linear inverter.

A good compensator decreases THD, providing sinusoidal output voltage and sinusoidal current for linear loads. This enables the control of inverters at very light loads, and enables compliance with harmonic emission standards at such load conditions. Good compensators are also required to enable the use and accurate control of sensorless drives, especially at low rotational speeds.

The existing dead-time compensation methods can be classified as below:

- The simplest and most accurate way of doing this is via using an accurate voltage feedback from the output of each of the phase legs (before any filtering is done). This requires fast, extra measurement hardware which is otherwise not needed for the operation of the inverter normally. As such, this solution is seldom used.
- In some cases, current direction detection is possible via measuring the sign of the voltage on the free-wheeling diodes. Patent no US 6535402 B1 discloses such a solution. Using this method greatly decreases hardware costs, but some serious drawbacks cannot be excluded, especially at low currents (see below) or with zero crossing waveforms if the measurements are performed only at switching frequency.
- Most methods so far use only the sign of the measured average current (signum(I)) and therefore cannot cope with low current problems and discontinuous conduction mode. The operation of the simplest one of such compensators can be seen in Figure 4. Vertical line 180 shows the characteristic of the compensator, the actual values can be calculated from the approximate effective dead-time, the switching frequency and DC link voltage. Patent no. US 6714424 B2 also discloses a method which uses signum(I). David Leggate and Russel J. Kerkman, "Pulse Based Dead Time Compensator for PWM Voltage Inverters" IEEE Transactions on Industrial Electronics (1997), vol. 44, pp. 191-197. discloses a pulse based method which is also based on this input.
- There are differences in how the value of the effective dead-time is obtained. The more advanced variants of these methods use some kind of learning algorithm to approximate this value. It improves compensation. Two such methods from literature can be seen below: Seon-Hwan Hwang and Jang-Mok Kim, "Dead Time Compensation Method for Voltage-Fed PWM Inverter" IEEE Transactions on Energy Conversion (2010), vol. 25, pp. 1-10.
  Cichowski and J. Nieznanski, "Self-tuning dead-time compensation method for voltage-source inverters" IEEE Power Electronics Letters (2005), vol. 3, pp. 72-75.
- The most advanced methods try to make use of the amplitude of the current as well. Such methods found so far can be classified as analytical solutions and approximate solutions. An analytical solution is published by the inventors in A Futó, I Varjasi: "Compensation of Discontinuous Conduction in Three Phase Voltage Source PWM Inverters"

In: Renewable Energy & Power Quality Journal: RE&PQJ, edited by Manuel Perez Donsion. Place and date of conference: Cordoba, Spain, 2014.04.07-2014.04.10. Cordoba: European Association for the Development of Renewable Energies, Environment and Power Quality (EA4EPQ), 2014. pp. 1-6. (International Conference on Renewable Energies and Power Quality, ICREPQ'14) (ISBN:978-84-616-8196-9). Compensating for low current cases and discontinuous conduction mode require the frequent re-calculation of complex mathematical formulae in the controller chip of the inverter. For three-phase inverters, this is very computationally intensive and impractical.

Approximate solutions use pre-recorded or approximate characteristics to improve the results. These offer somewhat better performance than signum(I), but still leave considerable inaccuracy. An example of an approximate solution is the "linear interpolation" based compensator shown by line 190 in Figure 4. For high currents, this method uses the signum(I) approach, but for currents lower than a pre-set limit, it compensates via using an approximate error voltage calculated from a linear interpolation between the error voltage for positive and negative currents. This improves compensation at low currents. Patent no US 8084986 B2 discloses a similar but more advanced method. In the method the RMS (Root Mean Squared) current and the actual-to-RMS current ratio values (called "per unit" in the cited document) are applied separately to two lookup tables containing previous error measurement data values. The two results are multiplied to get the error voltage values.

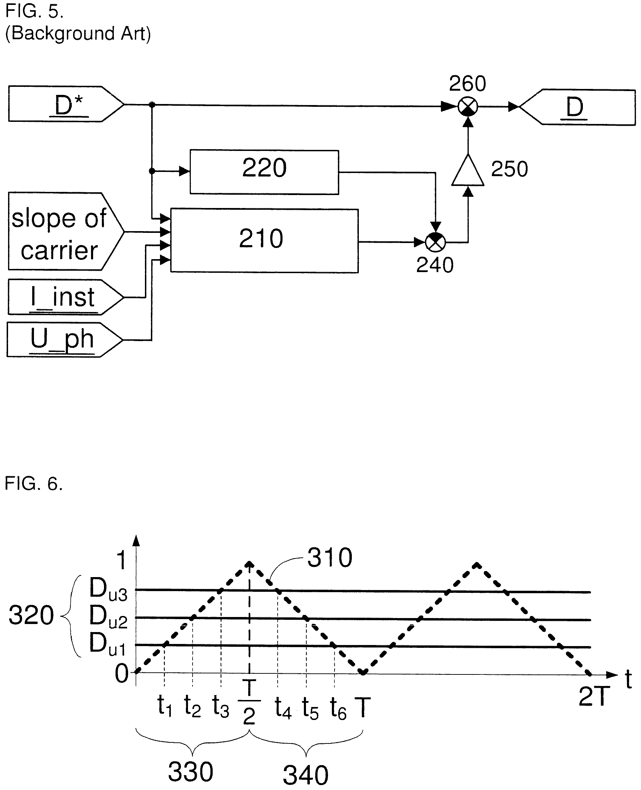

To increase low current performance, a new model based compensator was published by the inventors in Andras Futo, Istvan Varjasi: "Simple Model Based Dead Time Compensation Using Fast Current Measurement" In: AASRI Conference on Circuit and Signal Processing: (CSP 2014). Place and date of conference: London, UK, 2014.06.21-2014.06.22. Elsevier, 2014. pp. 146-151. (in AASRI Procedia: http://www.sciencedirect.com/science/article/pii/S2212671614001231). The described model can be seen in Figure 5. The input of the compensator is the duty cycle vector D* which basically contains reference duty cycles. D* would result in the accurate output voltage vector on a theoretical ideal inverter using ideal switches with no switching delays and thus having zero transition times, controlled without control deadtime. The model 210 calculates the average bridge voltages ub av which would appear at the output of the non-ideal inverter if D* is applied on it. The model uses voltage and current data measured at the beginning of the half period. The 210 model calculates with discontinuous conduction mode, dead-time, switch delays, and voltage drops too. The ideal inverter block 220 calculates the bridge voltages for the ideal inverter ub ideal = (D*-½)*Udc. The subtractor 240 calculates the difference between the output of the ideal and the non-ideal inverter, and the divider 250 divides this difference by Udc. This is then used for compensation in subtractor 260. This simple intervention can be performed fast, but it gives perfect results only in continuous conduction (high current) mode. In low current cases where the half current ripple Is larger than the average current, current waveforms containing zero crossings can arise. For such cases, this formula only gives approximate results.

## SUMMARY

Therefore it is an object of the invention to provide an Improved method and system for dead time compensation for PWM controlled inverters.

This object may be achieved by using a method for compensating the dead time effects In a pulse wide modulated voltage sourced inverter according to claim 1 and using a system according to claim 13. A PWM VSI, generally comprises In each phase a pair of semiconductor switching elements connected In series between DC voltage rails of a DC power source and a pair of diodes connected in series between the DC voltage rails of the DC power source wherein each of the diodes is connected antiparallel with a respective semiconductor switching element. Each phase output node Is connected to an LC filter circuit. According to one aspect of the invention, the method comprises the step of

- providing a PWM control signal for controlling the switching state of the semiconductor switching elements in each phase leg.
- taking measurement samples of different parameters including at least a phase current and an DC rail voltage Influencing the voltage (Ub) of a phase leg cyclically, The method is further characterized by the steps of
- selecting the frequency of taking the samples so that at least one sample of the parameters is taken during each half period of the PWM carrier signal,
- using the time of taking the measurement sample as a periodic or in-cycle time stamp,
- determining the number of already switched over phases In each half period of the PWM carrier signal for the actual in-cycle time stamp, and
- carrying out a different in-cycle correction of the duty cycle (D) depending on the number of phases not yet switched over.

The measured parameters are the input DC voltage, the phase leg current values and the output phase voltages.

The duty cycle of the phases not yet switched over may be corrected in the same way for a given timestamp. However, depending on the number of already switched over phases, for a given timestamp, a different correction of the duty cycle is carried out.

If, for a given timestamp, the number of switched-over phases is zero, the duty cycle for all of the three phases is corrected by decreasing the duty cycle of an ideal inverter (D*) by a difference value ($\Delta$D). This may be called complete correction of the duty cycle of all three phases.

The difference value ($\Delta$D) for determining the duty cycle (D) is obtained by dividing an error voltage Uerr by the DC voltage $U_{DC}$, wherein the error voltage. Uerr is the difference of a phase leg voltage determined on the basis of the measured parameters and of the ideal phase leg voltage Ub_ideal.

The ideal phase leg voltage is determined by a model for an ideal inverter and the non-ideal phase leg voltage is determined by a model for a non-ideal inverter taking in to account deadtime, switch delay time, voltage drops and discontinuous conduction mode.

If, for a given timestamp, the number of switched-over phases is one, the duty cycle of the two phases not yet switched over is corrected by decreasing the duty cycle of an ideal inverter (D*) by a difference value (∆D) and increasing the same by a shifting value V for changing the zero order component of the phase leg voltage vector. As the duty cycle of the already switched over phase cannot be corrected this time, the remaining two phases can be corrected with respect to the already switched over phase so that whole duty cycle vector is shifted with the value V.

If, for a given timestamp, the number of switched-over phases is two, a desired duty cycle D' of the one phase not yet switched over is calculated by decreasing the duty cycle of an ideal inverter (D*) by a difference value (∆D) and the duty cycle nearest to the desired duty cycle is determined by minimizing an error vector E=D-D'. This correction the duty cycle can be termed as partial correction.

And if, for a given timestamp, the number of switched-over phases is three, no correction of the duty cycle for the three phases is carried out. When all three phases are switched over, no more correction is possible. This case only occurs, if the timestamp is near to the end of a half period of the PWM carrier signal. If only one timestamp is applicable, through the proper selection of the timestamp with respect to the half period can be guaranteed that at least a partial or a full correction is possible.

Therefore it may be advantageous to increase the frequency of sample taking so that the number of timestamps during a half period of PWM carrier signal Is at least three. In this case it is very likely that at least one complete correction or a partial correction of the duty cycle of the phases can be carried out.

According to an aspect of the invention a control delay time additionally to the periodic time stamp is applied in order to determine the time of intervention, which may be used instead of the periodic time stamp.

The object of the invention may be achieved by using a system for compensating the dead time delay In a pulse width modulated voltage sourced inverter, PWM VSI, comprising in each phase a pair of semiconductor switching elements connected in series between DC voltage rails of a DC power source and a pair of diodes connected in series between the DC voltage rails of the DC power source wherein each of the diodes is connected antiparallel with a respective semiconductor switching element, wherein each phase output node is connected to an LC filter circuit. The system also comprises

- a PWM modulator for providing a PWM control signal for controlling the switching state of the semiconductor switching elements (SW1, SW2) in each phase leg. The system Is further chacterized by comprising
- a sample and hold unit for taking at least one measurement sample of different parameters including at least a phase current and an DC rail voltage influencing the voltage (Ub) of a phase leg cyclically during each half period of the PWM carrier signal, and for determining in-cycle time stamps as the time of taking the measurement samples,
- means for determining the number of already switched over phases in each half period of the PWM carrier signal for the actual in-cycle time stamp, and
- means for carrying out a different in-cycle correction of the duty cycle (D) depending on the number of the phases not yet switched over.

According to an aspect of the invention, the means for carrying out an in-cycle correction of the duty cycle (D) comprises an intervention unit (460) provided a first input for receiving an ideal duty cycle value (D*) a second input for receiving timestamp values, a third input for receiving Information on the number of the switched over phases, a fourth input for receiving a duty cycle difference value (∆D) and an output for the corrected duty cycle (D).

BRIEF DESCRIPTION OF THE DRAWINGS

In order that the invention may be more readily understood, reference will now be made, by way of example, to the accompanying drawings in which:

Figure 1 is a circuit diagram of a general three phase two-level voltage source inverter.
Figure 2 is a graph of the voltage waveforms of the gate drive signals of the two semiconductor switches and the bridge voltage versus time for one phase leg of a general voltage source inverter.
Figure 3 is a diagram showing the average bridge output voltage, bridge current, and the voltage required for compensation versus time. The distortion caused by dead time is visible on the top diagram which shows the average bridge voltage for both ideal inverters with zero effective dead time ($u_{bAV,ideal}$) and for real inverters with nonzero effective dead time ($U_{bAV,real}$)
Figure 4 Is a graph showing the operation of two conventional dead-time compensation methods. The graph shows the estimated error voltage versus average inverter output current for a phase leg.

Figure 5 is a schematic block diagram of a previous model based dead-time compensator system.

Figure 6 is a graph of the triangular carrier waveform versus time used in three-phase PWM Voltage Sourced Inverters (VSI). The graph also shows the three duty cycle values, and defines time points and regions relevant for the in-cycle intervention logic.

Figure 7 is a schematic block diagram of a model based dead time compensator system capable of in-cycle intervention.

Figure 8 is a flow chart of a model based dead-time compensator system capable of in-cycle intervention, showing details of how the in-cycle intervention can be performed at various points of time, in a model according to Fig. 7.

## DETAILED DESCRIPTION

The main advantage of the system as suggested is its ability to quickly react to changes. This is performed by providing in-cycle-intervention ability. It can be better understood with the help of Figure 6 which shows the operation of a three phase PWM modulator. The triangular PWM carrier 310 is compared in the modulator with the duty cycles Du1, Du2 and Du3 to generate the PWM control signal at the output of the modulator. The slope of the carrier is positive in the half period 330, so the phase legs switch from the high to the low side. The first switch-over happens at $t_1$, the second at $t_2$, and the third at $t_3$, respectively. It will be appreciated that the values $t_1$, $t_2$, and $t_3$, are not static values but rather dynamic ones, oscillating between the upper and lower limits of the PWM carrier signal according to a sinusoid 3 phase AC voltage. Therefore not only the absolute position of $t_1$, $t_2$, and $t_3$, changes, but also the relative position of these values with respect to each other. It will also be contemplated that $t_1$ might be equal to $t_2$, while $t_3$ is different and $t_2$ might be equal to $t_3$, while $t_1$ is different. It might be also clear that the assignment of the times and duty cycles $t_1$ - Du1, $t_2$ - Du2 and $t_3$ - Du3 is not constant, it changes with the time cyclically. The time $t_1$ means only the first swith-over of a phase leg which might belong to a phase with the duty cycle Du1, Du2 or Du3 equally.

Full compensation is possible before $t_1$ or ($t_1 = t_2$) because before this point of time, no switch-over has yet happened and thus all three duty factors can still be modified. Between $t_1$ and $t_2$, full compensation is still possible if the zero order impedance is infinite, but the zero order modulation will be changed. After $t_2$. If $t_2 \neq t_3$, only partial compensation is possible, and after $t_3$ or ($t_2 = t_3$) the average output voltage for the given half-period cannot be modified anymore. The same applies for the second half-period 340, the only difference is that the phase legs switch from the low to the high side. The compensator under discussion uses these possibilities to perform the necessary modifications to the duty cycles where possible.

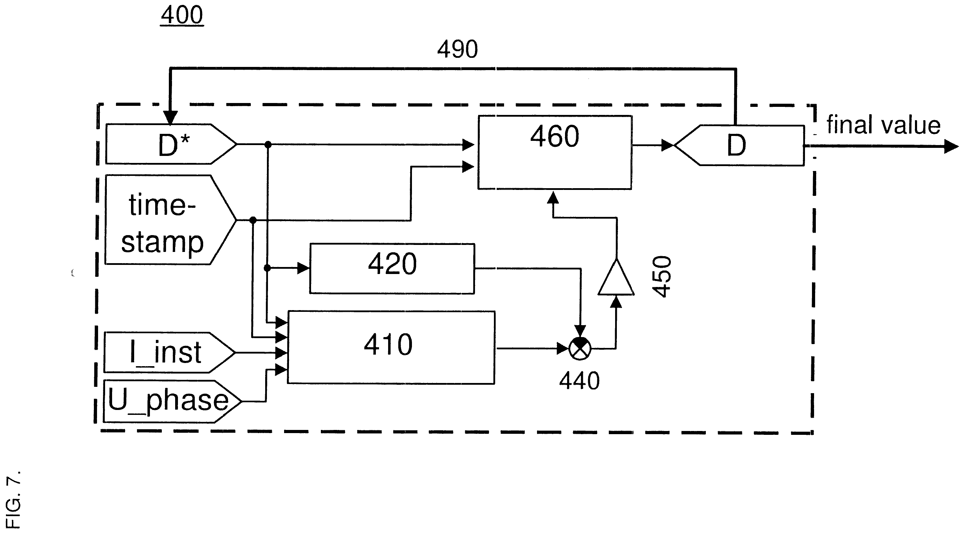

The block diagram of the compensator system 400 can be seen in Figure 7. It is very similar to the model based compensator seen in Figure 5. The inputs of the system are the $\underline{D^*}$ reference duty factor vector, the instantaneous currents $i_a$, $i_b$, $i_c$, the DC voltage $U_{DC}$, and the three grid phase voltages $U_{p\_A}$, $U_{p\_B}$ and $U_{p\_C}$. These parameters are sampled by analog sample and hold circuits, and are then digitalized via A/D converters. The periodic or in-cycle time stamp of the measurements is the time when the sample&hold operation was performed relative to the beginning of the actual half-period of the PWM carrier. The model 410 calculates the possible average bridge voltages $u_{bA}$, $u_{bB}$, and $u_{bC}$ for the actual half period of the triangular carrier if the duty cycle vector $\underline{D^*}$ Is applied to a non-Ideal PWM Inverter having delays and voltage drops. The model does this estimation using all previous duty cycles from previous iterations within the actual half-period, and actual measurement data. The models 210, 220, 410, 420, are known from earlier publications of the inventors, therefore they will only be described in a detail necessary for the understanding of the invention. The ideal inverter block 420 calculates the bridge voltages for the ideal inverter $\underline{ub\ ideal} = (\underline{D^*}-\frac{1}{2})*Udc$. The subtractor 440 calculates the difference between the output of the Ideal and the non-Ideal Inverter $Uerr = \underline{Ub\ ideal} - \underline{Ub\ pred}$, and the block 450 divides this difference by Udc to have duty cycle dimension $D = Uerr/Udc$. According to the invention an intervention block 460 is applied which decides on the type of intervention used, based on the actual timestamp of the measurements and the previous duty cycle values. This is required for the in-cycle intervention ability. The output of the compensator is fed back to the input for the next run, as shown by the loop 490. This increases accuracy. The algorithm can operate continuously, in a cyclical manner. It can be run as a separate task or on a separate core of the DSP which controls the inverter. Relatively fast sensors are required, capable of producing inductor current measurements at a sampling frequency at least one order of magnitude higher than the switching frequency of the Inverter, so that nearly instantaneous currents can be taken. The frequency of intervention is not locked to the switching frequency, and is only limited by the speed of the controller DSP and the current measurement unit.

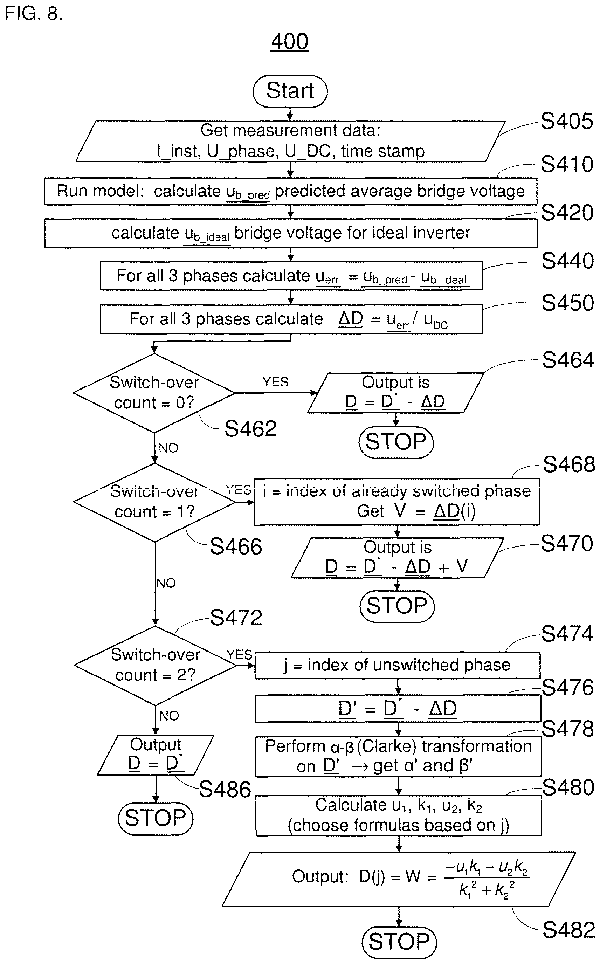

The detailed operation of the compensator system 400 can be seen in a flowchart (Figure 8). The underlined variables in the flowchart are vectors containing three elements (one for each phase). Some steps of the flow chart have the same number as a block in Figure 7. These correspond to the same operation. At the beginning of a new iteration of the compensator algorithm in system 400, new instantaneous inductor current measurement values are collected, along with output phase voltage data and DC voltage In S405. The model 410 Is run In S410 to get the average bridge voltage for the real inverter. The average bridge voltage for the Ideal Inverter is calculated in S420. The difference is calculated in S440, and It is scaled to duty cycle range In S450.

The decision block S462 checks the actual in-cycle time stamp. If It Is smaller than $t_1$ as seen In Figure 6, no switch-over has happened so far. In this case, step S464 is executed. The output duty cycle D is simply a difference between the input D* and the calculated difference value $\Delta$D.

Otherwise, the block S466 checks if the in-cycle time stamp is between $t_1$ and $t_2$. If this Is true, a switch-over has already happened in one of the phases. Based on the duty cycle values, the already switched-over phase can be identified (phase i in S468) and the corresponding difference duty cycle (labelled as V) can be used in S470, where the whole duty cycle vector is shifted with this value. This means that the duty factor of the already switched phase remains unchanged, and the correction is performed by changing the zero order component of the bridge voltage vector. This can be done in most three-phase inverters, as the neutral cable is not connected to the DC link, so the zero-order impedance is very high.

If the actual in-cycle time stamp is after $t_2$, then full correction cannot be performed, but a partial correction may be possible. The block S472 decides if it is still possible to intervene In one of the duty cycles. If yes, the goal of the compensator is to calculate the duty cycle vector $\underline{D}$ closest to the desired duty cycle vector $\underline{D}'$ while only one component of $\underline{D}$ can be modified, this is D(j), labelled as W. The j index is determined in S474. $\underline{D}'$ is calculated in step S476 and an $\alpha$-$\beta$ transformation (also called Clarke transformation) is performed in S478 on three-phase vector $\underline{D}'$ to get $\alpha'$ and $\beta'$. As mentioned before, the goal is to minimize the length of an error vector $\underline{E} = \underline{D} - \underline{D}'$. The elements of the $\underline{D}$ output duty cycle vector are called a, b, and c, respectively. Using the formulas of the Clarke transformation, the Clarke representation of the output can be written as:

$$\beta = \frac{1}{\sqrt{3}}b - \frac{1}{\sqrt{3}}c \quad \text{and} \quad \alpha = \frac{2}{3}a - \frac{1}{3}b - \frac{1}{3}c$$

where a, b, and c are phase quantities (in this case, duty factors) and $\alpha$ and $\beta$ are Descartes coordinates which define the three phase vector (here duty factor vector) in a stationary reference frame.

The square of the Euclidean norm of the error vector can be written as follows:

$$|\underline{E}|^2 = (\alpha - \alpha')^2 + (\beta - \beta')^2 = \underbrace{\left(\frac{2}{3}a - \frac{1}{3}b - \frac{1}{3}c - \alpha'\right)}_{(u_1 + k_1 \cdot W)}^2 + \underbrace{\left(\frac{1}{\sqrt{3}}b - \frac{1}{\sqrt{3}}c - \beta'\right)}_{(u_2 + k_2 \cdot W)}^2$$

In the above formula, one of the three phase duty factors a, b, and c is unknown. That one is marked as W. The other two, as well as $\alpha'$ and $\beta'$ are known variables. Thus it can be easily understood that the two polynomials in the brackets can be rewritten as the sum of a constant part ($u_1$ and $u_2$) plus a term proportional to W ($k_1*W$ and $k_2*W$). Here the value W needs to be calculated. W is equal to D(j) which is one of a, b, or c depending on the j index determined in S474. The constants $u_1$, $k_1$, $u_2$, and $k_2$ can be calculated using the two already available elements of $\underline{D}$, and using $\alpha'$ and $\beta'$. This is performed in S480. Using these variables, the length of the error vector can be calculated by the following equation:

$$|\underline{E}|^2 = \left(k_1^2 + k_2^2\right) \cdot W^2 + 2 \cdot \left(u_1 k_1 + u_2 k_2\right) \cdot W + u_1^2 + u_2^2$$

The formula for $|\underline{E}|^2$ defines an upward opening parabola. Its minimum value can be found via derivation:

$$\frac{d|\underline{E}|^2}{dW} = \left(k_1^2 + k_2^2\right) \cdot W + u_1 k_1 + u_2 k_2 = 0$$

The above equation is used in S482 to calculate the final output D(j). If none of the duty cycles can be changed, the algorithm jumps from S472 to S486 and leaves the duty cycle vector unchanged. Finding the proper duty cycle values will result in proper phase voltages with a minimum of total harmonic distortion THD even under frequently changing load conditions.

It is understood that the system and method described herein may be included in a programmable HW array such as an FPGA and transformed to hardware in the production of integrated circuits. Additionally, the apparatus and methods described herein may be embodied as a combination of hardware and software. Thus, the present invention should not be limited by any of the above-described exemplary embodiments, but should be defined only in accordance with the following claims and their equivalents.

**Claims**

1. Method for compensating the dead time in a pulse wide modulated voltage sourced inverter (PWM,VSI), comprising in each phase a pair of semiconductor switching elements (SW1, SW2) connected in series between DC voltage rails of a DC power source and a pair of diodes (D1, D2) connected in series between the DC voltage rails of the DC power source wherein each of the diodes (D1, D2) Is connected antiparallel with a respective semiconductor switching element (SW1, SW2), wherein each phase output node (A, B, C) is connected to an LC filter circuit, the method comprising the steps of

   - providing a PWM control signal for controlling the switching state of the semiconductor switching elements (SW1, SW2) in each phase leg,
   - taking measurement samples of different parameters including at least a phase current and a DC rail voltage influencing the voltage (Ub) of a phase leg cyclically, **characterized in** the further steps of
   - selecting the frequency of taking the samples so that at least one sample of the parameters is taken during each half period of the PWM carrier signal,
   - using the time of taking the measurement sample as a periodic or in-cycle time stamp,
   - determining the number of already switched over phases in each half period of the PWM carrier signal for the actual in-cycle time stamp, and
   - carrying out a different in-cycle correction of the duty cycle (D) depending on the number of phases not yet switched over.

2. The method of claim 1, wherein the duty cycle (D) of the phases not yet switched over is corrected in the same way for a given timestamp.

3. The method of claim 2, wherein a different correction of the duty cycle (D) is carried out depending on the number of already switched over phases, for a given timestamp.

4. The method of claim 3, wherein, if the number of switched-over phases is zero, the duty cycle (D) for all of the three phases is corrected by decreasing the duty cycle of an ideal inverter (D*) by a difference value ($\Delta$D).

5. The method of claim 3, wherein, if the number of switched-over phases is one, the duty cycle of the two phases not yet switched over is corrected by decreasing the duty cycle of an ideal inverter (D*) by a difference value ($\Delta$D) and increasing the same by a shifting value V for changing the zero order component of the phase leg voltage vector.

6. The method of claim 3, wherein, if the number of switched-over phases is two, a desired duty cycle D' of the one phase not yet switched over is calculated by decreasing the duty cycle of an ideal inverter (D*) by a difference value ($\Delta$D) and the duty cycle nearest to the desired duty cycle Is determined by minimizing an error vector E=D-D'.

7. The method of claim 3, wherein, if the number of switched-over phases is three for a given timestamp, no correction of the duty cycle for the three phases is carried out.

8. The method of claim 1 to 7, wherein the number of timestamps during a half period of PWM carrier signal is at least three.

9. The method of claim 1 to 8, wherein a control delay time additional to the periodic time stamp is applied order to determine the time of intervention, which may be used instead of the periodic time stamp.

10. The method of claim 4 to 6, wherein the difference value ($\Delta$D) for determining the duty cycle (D) is obtained by dividing an error voltage Uerr by the DC voltage $U_{DC}$, wherein the error voltage Uerr is the difference of a phase leg voltage determined on the basis of the measured parameters and of the ideal phase leg voltage Ub_ideal.

11. The method of claim 10, wherein the measured parameters are the input DC voltage ($U_{DC}$), the phase leg current values ($I_A$, $I_B$, $I_C$), and the output phase voltages ($U_{pA}$, $U_{pB}$, $U_{pC}$).

12. The method of 12, wherein the ideal phase leg voltage is determined by a model for an ideal inverter and the non-ideal phase leg voltage is determined by a model for a non-Ideal inverter taking in to account deadtime, switch delay time, voltage drops and discontinuous conduction mode.

13. System for compensating the dead time delay in a pulse wide modulated voltage sourced inverter (PWM,VSI) comprising In each phase a pair of semiconductor switching elements (SW1, SW2) connected in series between DC voltage rails of a DC power source and a pair of diodes (D1, D2) connected in series between the DC voltage rails of the DC power source wherein each of the diodes (D1, D2) is connected antiparallel with a respective semiconductor switching element (SW1, SW2), wherein each phase output node (A, B, C) is connected to an LC filter circuit, the system also comprising

- a PWM modulator for providing a PWM control signal for controlling the switching state of the semiconductor switching elements (SW1, SW2) in each phase leg, **characterized In that** the system further comprises
- a sample and hold unit for taking at least one measurement sample of different parameters including at least a phase current and a DC rail voltage Influencing the voltage (Ub) of a phase leg cyclically during each half period of the PWM carrier signal, and for determining periodic time stamps as the time of taking the measurement samples,
- means for determining the number of already switched over phases in each half period of the PWM carrier signal for the actual periodic time stamp, and
- means for carrying out a different in-cycle correction of the duty cycle (D) depending on the number of phases not yet switched over.

14. The system of claim 14, wherein the means for carrying out an in-cycle correction of the duty cycle (D) comprises an intervention unit (460) provided a first Input for receiving an ideal duty cycle value (D*) a second input for receiving periodic time stamp values, a third input for receiving information on the number of the switched over phases, a fourth Input for receiving a duty cycle difference value (ΔD) and an output for the corrected duty cycle (D).

**Patentansprüche**

1. Verfahren zum Ausgleichen der Totzeit in einem pulsweitenmodulierten spannungsgeführten Wechselrichter (PWM, VSI), umfassend, in jeder Phase, ein Paar von Halbleiterschaltelementen (SW1, SW2), die zwischen Gleichspannungsschienen einer Gleichstromquelle in Reihe geschaltet sind, und ein Paar von Dioden (D1, D2), die zwischen den Gleichspannungsschienen der Gleichstromquelle in Reihe geschaltet sind, wobei jede der Dioden (D1, D2) antiparallel mit einem jeweiligen Halbleiterschaltelement (SW1, SW2) verbunden ist, wobei jeder Phasenausgangsknoten (A, B, C) mit einer LC-Filterschaltung verbunden ist, wobei das Verfahren die folgenden Schritte umfasst:

- Bereitstellen eines PWM-Steuersignals zum Steuern des Schaltzustands der Halbleiterschaltelemente (SW1, SW2) in jedem Phasenabschnitt,
- Erfassen von Messproben verschiedener Parameter, einschließlich mindestens eines Phasenstroms und einer Gleichspannungsschienenspannung, die zyklisch die Spannung (Ub) eines Phasenabschnitts beeinflusst, ferner **gekennzeichnet durch** die folgenden Schritte
- Auswählen der Abtastungsfrequenz, so dass während jeder Halbperiode des PWM-Trägersignals mindestens eine Abtastung der Parameter erfolgt,
- Verwenden der Zeit der Messprobennahme als einen periodischen oder zyklusinternen Zeitstempel,
- Bestimmen der Anzahl von bereits umgeschalteten Phasen in jeder Halbperiode des PWM-Trägersignals für den tatsächlichen zyklusinternen Zeitstempel und
- Ausführen einer unterschiedlichen zyklusinternen Korrektur des Tastverhältnisses (D) in Abhängigkeit von der Anzahl der noch nicht umgeschalteten Phasen.

2. Verfahren nach Anspruch 1, wobei das Tastverhältnis (D) der noch nicht umgeschalteten Phasen auf die gleiche Weise für einen vorgegebenen Zeitstempel korrigiert wird.

3. Verfahren nach Anspruch 2, wobei eine unterschiedliche Korrektur des Tastverhältnisses (D) abhängig von der Anzahl der bereits umgeschalteten Phasen für einen vorgegebenen Zeitstempel ausgeführt wird.

4. Verfahren nach Anspruch 3, wobei, wenn die Anzahl der umgeschalteten Phasen null ist, das Tastverhältnis (D) für alle drei Phasen korrigiert wird, indem das Tastverhältnis eines idealen Umrichters (D*) um einen Differenzwert (ΔD) verringert wird.

5. Verfahren nach Anspruch 3, wobei, wenn die Anzahl der umgeschalteten Phasen eins ist, das Tastverhältnis der zwei noch nicht umgeschalteten Phasen durch Verringern des Tastverhältnisses eines idealen Umrichters (D*) um einen Differenzwert ($\Delta$D) und durch Erhöhen desselben um einen Verschiebungswert V zum Ändern der Komponente nullter Ordnung des Phasenabschnittsspannungsvektors berechnet wird.

6. Verfahren nach Anspruch 3, wobei, wenn die Anzahl der umgeschalteten Phasen zwei ist, ein gewünschtes Tastverhältnis D' der einen noch nicht umgeschalteten Phase durch Verringern des Tastverhältnisses eines idealen Umrichters (D*) um einen Differenzwert ($\Delta$D) berechnet wird und das Tastverhältnis, das dem gewünschten Tastverhältnis am nächsten ist, durch Minimieren eines Fehlervektors E=D-D' bestimmt wird.

7. Verfahren nach Anspruch 3, wobei, wenn die Anzahl der umgeschalteten Phasen für einen gegebenen Zeitstempel drei ist, keine Korrektur des Tastverhältnisses für die drei Phasen ausgeführt wird.

8. Verfahren nach einem der Ansprüche 1 bis 7, wobei die Anzahl der Zeitstempel während einer Halbperiode des PWM-Trägersignals mindestens drei beträgt.

9. Verfahren nach einem der Ansprüche 1 bis 8, wobei eine Steuerverzögerungszeit zusätzlich zu dem periodischen Zeitstempel angewendet wird, um die Zeit des Eingriffs zu bestimmen, die anstelle des periodischen Zeitstempels verwendet werden kann.

10. Verfahren nach einem der Ansprüche 4 bis 6, wobei der Differenzwert ($\Delta$D) zum Bestimmen des Tastverhältnisses (D) durch Dividieren einer Fehlerspannung Uerr durch die Gleichspannung $U_{DC}$ erhalten wird, wobei die Fehlerspannung Uerr die Differenz einer Phasenabschnittsspannung ist, die auf der Basis der gemessenen Parameter und der idealen Phasenabschnittsspannung Ub_ideal bestimmt wird.

11. Verfahren nach Anspruch 10, wobei die gemessenen Parameter die Eingangsgleichspannung ($U_{Dc}$), die Phasenabschnittsstromwerte ($I_A$, $I_B$, $I_C$) und die Ausgangsphasenspannungen ($U_{pA}$, $U_{pB}$, $U_{pC}$) sind.

12. Verfahren nach 12, wobei die ideale Phasenabschnittsspannung durch ein Modell für einen idealen Umrichter bestimmt wird und die nicht ideale Phasenabschnittsspannung durch ein Modell für einen nicht idealen Umrichter unter Berücksichtigung der Totzeit, Schaltverzögerungszeit, Spannungsabfälle und des diskontinuierlichen Leitungsmodus bestimmt wird.

13. System zum Ausgleichen der Totzeit in einem pulsweitenmodulierten spannungsgeführten Wechselrichter (PWM, VSI), umfassend, in jeder Phase, ein Paar von Halbleiterschaltelementen (SW1, SW2), die zwischen Gleichspannungsschienen einer Gleichstromquelle in Reihe geschaltet sind, und ein Paar von Dioden (D1, D2), die zwischen den Gleichspannungsschienen der Gleichstromquelle in Reihe geschaltet sind, wobei jede der Dioden (D1, D2) antiparallel mit einem jeweiligen Halbleiterschaltelement (SW1, SW2) verbunden ist, wobei jeder Phasenausgangsknoten (A, B, C) mit einer LC-Filterschaltung verbunden ist, wobei das System auch umfasst:

    - einen PWM-Modulator zum Bereitstellen eines PWM-Steuersignals zum Steuern des Schaltzustands der Halbleiterschaltelemente (SW1, SW2) in jedem Phasenabschnitt, **gekennzeichnet dadurch, dass** das System ferner umfasst:
    - eine Proben- und Halteeinheit zum Erfassen mindestens einer Messprobe von unterschiedlichen Parametern, einschließlich mindestens eines Phasenstroms und einer Gleichstromschienenspannung, welche die Spannung (Ub) eines Phasenabschnitts während jeder Halbperiode des PWM-Trägersignals zyklisch beeinflusst, und zum Bestimmen von periodischen Zeitstempeln als die Zeit der Messprobennahme,
    - Mittel zum Bestimmen der Anzahl von bereits umgeschalteten Phasen in jeder Halbperiode des PWM-Trägersignals für den tatsächlichen periodischen Zeitstempel und
    - Mittel zum Ausführen einer unterschiedlichen zyklusinternen Korrektur des Tastverhältnisses (D) in Abhängigkeit von der Anzahl der noch nicht umgeschalteten Phasen.

14. System nach Anspruch 14, wobei das Mittel zum Ausführen einer zyklusinternen Korrektur des Tastverhältnisses (D) eine Interventionseinheit (460) umfasst, die mit einem ersten Eingang zum Empfangen eines idealen Tastverhältniswertes (D*), einem zweiten Eingang zum Empfangen von periodischen Zeitstempelwerten, einem dritten Eingang zum Empfangen von Informationen über die Anzahl der umgeschalteten Phasen, einem vierten Eingang zum Empfangen eines Tastverhältnisdifferenzwertes ($\Delta$D) und einem Ausgang für das korrigierte Tastverhältnis (D) versehen ist.

**Revendications**

1. Procédé de compensation du temps mort dans un onduleur à source de tension modulée à impulsions larges (PWM, VSI) comprenant dans chaque phase une paire d'éléments de commutation à semi-conducteurs (SW1, SW2) reliés en série entre des rails de tension CC d'une source d'alimentation CC et une paire de diodes (D1, D2) reliées en série entre les rails de tension CC de la source d'alimentation CC, dans lequel chacune des diodes (D1, D2) est reliée de manière antiparallèle à un élément de commutation à semi-conducteurs respectif (SW1, SW2), dans lequel chaque noeud de sortie de phase (A, B, C) est relié à un circuit de filtrage LC, le procédé comprenant les étapes :

   - d'émission d'un signal de commande PWM pour commander l'état de commutation des éléments de commutation à semi-conducteurs (SW1, SW2) dans chaque branche de phase,
   - de prélèvement d'échantillons de mesure de différents paramètres comprenant au moins un courant de phase et une tension de rail CC influençant cycliquement la tension (Ub) d'une branche de phase, **caractérisé par** les étapes supplémentaires :
   - de sélection de la fréquence de prélèvement des échantillons de sorte qu'au moins un échantillon des paramètres est prélevé pendant chaque demi-période du signal de porteuse PWM,
   - d'utilisation du temps de prélèvement de l'échantillon de mesure en tant qu'horodatage périodique ou cyclique,
   - de détermination du nombre de phases déjà commutées dans chaque demi-période du signal de porteuse PWM pour l'horodatage cyclique réel, et
   - de réalisation d'une correction cyclique différente du rapport cyclique (D) en fonction du nombre de phases pas encore commutées.

2. Procédé selon la revendication 1, dans lequel le rapport cyclique (D) des phases pas encore commutées est corrigé de la même manière pour un horodatage donné.

3. Procédé selon la revendication 2, dans lequel une correction différente du rapport cyclique (D) est effectuée en fonction du nombre de phases déjà commutées, pour un horodatage donné.

4. Procédé selon la revendication 3, dans lequel, si le nombre de phases commutées est nul, le rapport cyclique (D) pour l'ensemble des trois phases est corrigé en diminuant le rapport cyclique d'un onduleur idéal (D*) selon une valeur de différence (ΔD).

5. Procédé selon la revendication 3, dans lequel, si le nombre de phases commutées est égal à un, le rapport cyclique des deux phases pas encore commutées est corrigé en diminuant le rapport cyclique d'un onduleur idéal (D*) selon une valeur de différence (ΔD) et en l'augmentant selon une valeur de décalage V pour modifier la composante d'ordre zéro du vecteur de tension de branche de phase.

6. Procédé selon la revendication 3, dans lequel, si le nombre de phases commutées est égal à deux, on calcule un rapport cyclique souhaité D' de la phase pas encore commutée en diminuant le rapport cyclique d'un onduleur idéal (D*) selon une valeur de différence (ΔD) et le rapport cyclique le plus proche du rapport cyclique souhaité est déterminé en minimisant un vecteur d'erreur E = D-D'.

7. Procédé selon la revendication 3, dans lequel, si le nombre de phases commutées est égal à trois pour un horodatage donné, aucune correction du rapport cyclique pour les trois phases n'est effectuée.

8. Procédé selon les revendications 1 à 7, dans lequel le nombre d'horodatages pendant une demi-période du signal de porteuse PWM est d'au moins trois.

9. Procédé selon les revendications 1 à 8, dans lequel un temps de retard de commande supplémentaire par rapport à l'horodatage périodique est appliqué afin de déterminer le moment de l'intervention, qui peut être utilisé à la place de l'horodatage périodique.

10. Procédé selon les revendications 4 à 6, dans lequel la valeur de différence (ΔD) pour déterminer le rapport cyclique (D) est obtenue en divisant une tension d'erreur Uerr par la tension CC $U_{cc}$, dans lequel la tension d'erreur Uerr est la différence d'une tension de branche de phase déterminée sur la base des paramètres mesurés et de la tension de branche de phase idéale Ub_ideal,

11. Procédé selon la revendication 10, dans lequel les paramètres mesurés sont la tension CC d'entrée ($U_{DC}$), les valeurs de courant de branche de phase ($I_A$, $I_B$, $I_C$) et les tensions de phase de sortie ($U_{PA}$, $U_{PB}$, $U_{PC}$).

12. Procédé selon la revendication 12, dans lequel la tension de branche de phase idéale est déterminée par un modèle pour un onduleur idéal et la tension de branche de phase non idéale est déterminée par un modèle pour un onduleur non idéal prenant en compte le temps mort, le temps de retard de commutation, les chutes de tension et le mode de conduction discontinue.

13. Système de compensation du retard de temps mort dans un onduleur à source de tension modulée à impulsions larges (PWM, VSI) comprenant dans chaque phase une paire d'éléments de commutation à semi-conducteurs (SW1, SW2) reliés en série entre des rails de tension CC d'une source d'alimentation CC et une paire de diodes (D1, D2) reliées en série entre les rails de tension CC de la source d'alimentation CC, dans lequel chacune des diodes (D1, D2) est reliée de manière antiparallèle à un élément de commutation à semi-conducteurs respectif (SW1, SW2), dans lequel chaque noeud de sortie de phase (A, B, C) est relié à un circuit de filtrage LC, le système comprenant également

   - un modulateur PWM pour émettre un signal de commande PWM pour commander l'état de commutation des éléments de commutation à semi-conducteurs (SW1, SW2) dans chaque branche de phase, **caractérisé en ce que** le système comprend en outre
   - une unité d'échantillonnage et de conservation pour prélever au moins un échantillon de mesure de différents paramètres comprenant au moins un courant de phase et une tension de rail CC influençant cycliquement la tension (Ub) d'une branche de phase pendant chaque demi-période du signal de porteuse PWM et pour déterminer des horodatages périodiques au moment du prélèvement des échantillons de mesure,
   - un moyen pour déterminer le nombre de phases déjà commutées dans chaque demi-période du signal de porteuse PWM pour l'horodatage périodique réel, et
   - un moyen pour effectuer une correction cyclique différente du rapport cyclique (D) en fonction du nombre de phases pas encore commutées.

14. Système selon la revendication 14, dans lequel le moyen pour effectuer une correction cyclique du rapport cyclique (D) comprend une unité d'intervention (460) pourvue d'une première entrée pour recevoir une valeur de rapport cyclique idéale (D*), d'une deuxième entrée pour recevoir des valeurs d'horodatage périodique, d'une troisième entrée pour recevoir des informations sur le nombre de phases commutées, d'une quatrième entrée pour recevoir une valeur de différence de rapport cyclique (ΔD) et d'une sortie pour le rapport cyclique corrigé (D).

FIG. 1
(Background Art)

FIG. 2
(Background Art)

FIG. 3
(Background Art)

FIG. 4
(Background Art)

FIG. 5.
(Background Art)

FIG. 6.

FIG. 7.

FIG. 8.

<u>400</u>

( Start )

Get measurement data:
I_inst, U_phase, U_DC, time stamp — S405

Run model: calculate $u_{b\_pred}$ predicted average bridge voltage — S410

calculate $u_{b\_ideal}$ bridge voltage for ideal inverter — S420

For all 3 phases calculate $\underline{u_{err}} = \underline{u_{b\_pred}} - \underline{u_{b\_ideal}}$ — S440

For all 3 phases calculate $\underline{\Delta D} = \underline{u_{err}} / u_{DC}$ — S450

Switch-over count = 0? —YES→ Output is $\underline{D} = \underline{D}^{\cdot} - \underline{\Delta D}$ — S464

( STOP )

S462

NO

Switch-over count = 1? —YES→ i = index of already switched phase Get $V = \underline{\Delta D}(i)$ — S468

Output is $\underline{D} = \underline{D}^{\cdot} - \underline{\Delta D} + V$ — S470

( STOP )

S466

NO

S472

Switch-over count = 2? —YES→ j = index of unswitched phase — S474

$\underline{D'} = \underline{D}^{\cdot} - \underline{\Delta D}$ — S476

Perform α-β (Clarke) transformation on $\underline{D'} \rightarrow$ get α' and β' — S478

NO

Output $\underline{D} = \underline{D}^{\cdot}$

S486

( STOP )

Calculate $u_1, k_1, u_2, k_2$ (choose formulas based on j) — S480

Output: $D(j) = W = \dfrac{-u_1 k_1 - u_2 k_2}{k_1{}^2 + k_2{}^2}$

( STOP ) — S482

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6535402 B1
- US 6714424 B2

- US 8084986 B2

### Non-patent literature cited in the description

- **DAVID LEGGATE ; RUSSEL J. KERKMAN.** Pulse Based Dead Time Compensator for PWM Voltage Inverters. *IEEE Transactions on Industrial Electronics,* 1997, vol. 44, 191-197
- **SEON-HWAN HWANG ; JANG-MOK KIM.** Dead Time Compensation Method for Voltage-Fed PWM Inverter. *IEEE Transactions on Energy Conversion,* 2010, vol. 25, 1-10
- **CICHOWSKI ; J. NIEZNANSKI.** Self-tuning dead-time compensation method for voltage-source inverters. *IEEE Power Electronics Letters,* 2005, vol. 3, 72-75
- **A FUTÓ ; I VARJASI.** *Compensation of Discontinuous Conduction in Three Phase Voltage Source PWM Inverters*

- Renewable Energy & Power Quality Journal: RE&PQJ. Environment and Power Quality (EA4EPQ). European Association for the Development of Renewable Energies, 07 April 2014, 1-6
- *International Conference on Renewable Energies and Power Quality, ICREPQ'14,* ISBN 978-84-616-8196-9
- Simple Model Based Dead Time Compensation Using Fast Current Measurement. **ANDRAS FUTO ; ISTVAN VARJASI.** AASRI Conference on Circuit and Signal Processing: (CSP 2014). Elsevier, 2014, 146-151